# EUROPÄISCHE PATENTANMELDUNG

(11) **EP 4 275 956 A1**
(43) Veröffentlichungstag der Anmeldung: **15.11.2023**
(21) Anmeldenummer: 22172808.2
(22) Anmeldetag: 11.05.2022
(51) Int. Cl.: B60Q 1/00, B60Q 1/24, B60Q 1/26, B60Q 1/30, B60Q 1/32, B60Q 1/34, B60Q 1/50, F21S 43/14, F21S 43/15, F21S 43/19, F21S 45/10

(54) **NUTZFAHRZEUG MIT WENIGSTENS EINER ELEKTRISCHEN AUSSENBELEUCHTUNGSEINRICHTUNG**

(71) Anmelder: Schmitz Cargobull AG, 48341 Altenberge (DE)
(72) Erfinder: BEELMANN, Reinhard, 45721 Haltern am See (DE)
(74) Vertreter: Cohausz & Florack

(57) **Zusammenfassung**

Beschrieben und dargestellt ist ein Nutzfahrzeug (N), insbesondere Lastkraftwagen, Anhänger oder Sattelauflieger, mit einem einen Laderaum zur Aufnahme von Ladung bereitstellenden Aufbau (1), insbesondere Kofferaufbau (1), wobei der Aufbau (1) wenigstens eine den Laderaum abschnittsweise begrenzende Wand (2,3,4), insbesondere seitlich begrenzende Seitenwand (3), aufweist und wobei wenigstens eine elektrische Außenbeleuchtungseinrichtung (11) zum Ausstrahlen von Licht in die Umgebung (U) des Nutzfahrzeugs (N), insbesondere zur Markierung der äußeren Kontur des Nutzfahrzeugs (N) und/oder zur Beleuchtung der Umgebung (U) des Nutzfahrzeugs (N), vorgesehen ist. Damit die Herstellung des Nutzfahrzeugs bei wenigstens gleichbleibender Beleuchtungsqualität mit geringerem Aufwand erfolgen kann, ist vorgesehen, dass die wenigstens eine Außenbeleuchtungseinrichtung (11) wenigstens ein sich wenigstens abschnittsweise entlang der Wand (2,3,4) erstreckendes LED-Band (9,10) aufweist und dass das wenigstens eine LED-Band (9,10) eine Mehrzahl von in Längsrichtung des LED-Bands (9,10) verteilt angeordneten LED-Leuchtmitteln (17,18) aufweist.

## Beschreibung

Die Erfindung betrifft ein Nutzfahrzeug, insbesondere Lastkraftwagen, Anhänger oder Sattelauflieger, mit einem einen Laderaum zur Aufnahme von Ladung bereitstellenden Aufbau, insbesondere Kofferaufbau, wobei der Aufbau wenigstens eine den Laderaum abschnittsweise begrenzende Wand, insbesondere seitlich begrenzende Seitenwand, aufweist und wobei wenigstens eine elektrische Außenbeleuchtungseinrichtung zum Ausstrahlen von Licht in die Umgebung des Nutzfahrzeugs, insbesondere zur Markierung der äußeren Kontur des Nutzfahrzeugs und/oder zur Beleuchtung der Umgebung des Nutzfahrzeugs, vorgesehen ist.

Nutzfahrzeuge sind in unterschiedlichen Ausgestaltungen bekannt, etwa in Form von Lastkraftwagen, Anhängern oder Sattelaufliegern. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge typischerweise einen Aufbau auf, der einen Laderaum für die Aufnahme der zu transportierenden Ladung bereitstellt. Aufbauten für Nutzfahrzeuge sind in unterschiedlichen Arten bekannt.

Beispielsweise sind sogenannte Planenaufbauten bekannt, bei denen wenigstens eine Seitenwand und/oder ein Dach durch wenigstens eine Plane verschlossen ist. Die Stirnwand ist bei Planenaufbauten meist als feste Wand ausgebildet, während die Rückwand regelmäßig im Wesentlichen durch zwei Rückwandtüren gebildet wird, um den Laderaum bedarfsweise von hinten zu beladen. Wenn die wenigstens eine Plane entlang der Seitenwand verschoben werden kann, spricht man auch von sogenannten Curtainsidern.

Im Gegensatz zu Planenaufbauten sind bei sogenannten Kofferaufbauten die Seitenwände und das Dach durch feste Wände verschlossen. Dabei sind die Seitenwände, das Dach, die Stirnwand und die Rückwandtüren von Kofferaufbauten regelmäßig jeweils wenigstens im Wesentlichen durch wenigstens ein Paneel gebildet, das typischerweise zwei strukturgebende Decklagen aufweist, zwischen denen eine Kernlage aus einem geschäumten Kunststoff vorgesehen ist. Die bedarfsweise mehrlagig ausgebildeten Decklagen dienen insbesondere zur Aussteifung der Paneele. Daher weisen die Decklagen für gewöhnlich wenigstens eine Schicht aus einem Metall und/oder einem faserverstärkten Kunststoff auf.

Da Kofferaufbauten geschlossen sind, werden Kofferaufbauten in besonderem Maße für den Transport von feuchtigkeitsempfindlichen Gütern, also den sogenannten Trockentransport, verwendet. Da die Kernlage aus geschäumtem Kunststoff eine hohe thermische Isolation bereitstellen kann, sind entsprechende, als Kühlkofferaufbauten bezeichnete Kofferaufbauten in ganz besonderem Maße für den Transport von temperaturempfindlichen Gütern, also beispielsweise für den sogenannten Kühltransport, vorgesehen. Um den Laderaum von Kühlkofferaufbauten temperieren, insbesondere kühlen, zu können, weisen entsprechende Nutzfahrzeuge häufig eine sogenannte Transportkältemaschine auf, die Kühlluft erzeugt und in den Laderaum hineinbläst. Parallel dazu saugt die Transportkältemaschine Luft aus dem Laderaum an, um die Luft abzukühlen und als Kühlluft zurück in den Laderaum zu blasen.

Unabhängig von der Art des Aufbaus weisen Nutzfahrzeuge typischerweise wenigstens eine elektrische Außenbeleuchtungseinrichtung zum Ausstrahlen von Licht in die Umgebung des Nutzfahrzeugs auf. So sind beispielsweise Außenbeleuchtungseinrichtungen zur aktiven Konturmarkierung bekannt, die insbesondere der besseren Erkennbarkeit des Umrisses des Nutzfahrzeugs etwa bei schlechten Sichtverhältnissen und/oder im Dunkeln dienen. Zudem sind Außenbeleuchtungseinrichtungen zur Umfeldbeleuchtung bekannt. Solche Außenbeleuchtungseinrichtungen dienen weniger der Erkennbarkeit des Nutzfahrzeugs durch andere Verkehrsteilnehmer als der Ausleuchtung der Umgebung des Nutzfahrzeugs, beispielsweise bei stehendem Nutzfahrzeug.

Unabhängig von ihrer Art umfassen Außenbeleuchtungseinrichtungen häufig eine Mehrzahl von separaten, voneinander beabstandet angeordneten Leuchten. So weisen beispielsweise Außenbeleuchtungseinrichtungen zur Konturmarkierung typischerweise mehrere separate Seitenmarkierungsleuchten auf, die in Längsrichtung des Nutzfahrzeugs verteilt angeordnet sind. Um dabei die Anzahl der separaten Leuchten und so den Herstellungsaufwand gering zu halten, werden die Leuchten bei den bekannten Nutzfahrzeugen in der Regel gerade so weit voneinander beabstandet angeordnet, wie es die gesetzlichen Bestimmungen und/oder die kundenspezifischen Anforderungen zulassen. Der auf diese Weise erreichbare Kompromiss zwischen geringem Herstellungsaufwand und hinreichender Beleuchtungsqualität ist jedoch noch nicht zufriedenstellend.

Daher liegt der vorliegenden Erfindung die Aufgabe zugrunde, das Nutzfahrzeug der eingangs genannten und zuvor näher erläuterten Art derart auszugestalten und weiterzubilden, dass die Herstellung des Nutzfahrzeugs bei wenigstens gleichbleibender Beleuchtungsqualität mit geringerem Aufwand erfolgen kann.

Diese Aufgabe ist bei einem Nutzfahrzeug nach dem Oberbegriff von Anspruch 1 dadurch gelöst, dass die wenigstens eine Außenbeleuchtungseinrichtung wenigstens ein sich wenigstens abschnittsweise entlang der Wand erstreckendes LED-Band aufweist und dass das wenigstens eine LED-Band eine Mehrzahl von in Längsrichtung des LED-Bands verteilt angeordneten LED-Leuchtmitteln aufweist.

Die Erfindung hat erkannt, dass durch das Ersetzen mehrerer in konventioneller Weise separat vorgesehener Leuchten durch ein LED-Band, das sich wenigstens entlang eines Abschnitts der Wand erstreckt und eine Mehrzahl von in Längsrichtung des LED-Bands verteilt angeordneten LED-Leuchtmitteln aufweist, der Aufwand zur Verkabelung der Außenbeleuchtungseinrichtung deutlich reduziert werden kann.

Dann muss nämlich nicht jede der separaten Leuchten einzeln verkabelt und nicht zu jeder der Leuchten ein eigener Zugang für die Verkabelung vorgesehen werden. Stattdessen kann in einfacher Weise das LED-Band insgesamt verkabelt und so die notwendige Anzahl an Zugängen für die Verkabelung verringert werden. Dies führt letztlich zu einer Reduzierung des Herstellungsaufwands insgesamt, ohne dass Einbußen hinsichtlich der Beleuchtungsqualität in Kauf genommen werden müssten.

Bei dem Aufbau des Nutzfahrzeugs kann es sich beispielsweise um einen Planenaufbau handeln. Bevorzugt ist es jedoch, wenn der Aufbau ein Kofferaufbau ist. Bei Kofferaufbauten kommen die zuvor beschriebenen Vorteile besonders zum Tragen, da die feste Ausgestaltung der Seitenwände und des Dachs eine umfangreiche Verkabelung der Außenbeleuchtungseinrichtung erschweren kann. Der Kofferaufbau kann vorzugsweise als Kühlkofferaufbau ausgebildet sein. Dies kann den zusätzlichen Vorteil bieten, dass Wärmebrücken reduziert werden, die durch Zugänge für die Verkabelung und/oder die Verkabelung selbst gebildet werden, was sich positiv auf die Isolierung des Laderaums auswirkt. Wenn der Kofferaufbau als Kühlkofferaufbau ausgebildet ist, kann das Nutzfahrzeug zweckmäßigerweise eine Transportkältemaschine zum Temperieren, insbesondere Kühlen, des Laderaums aufweisen.

Die Wand des Aufbaus, entlang der sich das wenigstens eine LED-Band wenigstens abschnittsweise erstreckt, kann beispielsweise eine den Laderaum nach vorne begrenzende Stirnwand oder eine den Laderaum nach hinten begrenzende Rückwand sein. Besonders bevorzugt ist es jedoch, wenn die Wand eine den Laderaum zur Seite begrenzende Seitenwand ist. Außenbeleuchtungseinrichtungen, die sich entlang einer Seitenwand erstrecken, weisen typischerweise eine große Ausdehnung auf, weshalb der Einsatz des wenigstens einen LED-Bands besonders vorteilhaft ist.

Mit dem wenigstens einen LED-Band kann insbesondere ein solches gemeint sein, das wenigstens eine bandförmige, vorzugsweise flexible, Leiterplatte aufweist. Dann kann die Mehrzahl von LED-Leuchtmitteln an der wenigstens einen Leiterplatte angebracht und elektrisch mit der wenigstens einen Leiterplatte verbunden sein, sodass die Mehrzahl von LED-Leuchtmittel über die wenigstens eine Leiterplatte mit elektrischem Strom versorgt werden kann. Das LED-Band kann auch mehrere in Längsrichtung des LED-Bands verteilt angeordnete Leiterplatten aufweisen, die elektrisch miteinander verbunden sind. Besonders einfach kann es jedoch sein, wenn das LED-Band eine sich wenigstens im Wesentlichen über die gesamte Länge des LED-Bands erstreckende, insbesondere flexible, Leiterplatte aufweist, die mit der Mehrzahl von LED-Leuchtmittel elektrisch verbunden sein kann.

Unter einem LED-Leuchtmittel wird insbesondere ein Leuchtmittel verstanden, das wenigstens eine Leuchtdiode (LED) aufweist. Neben der wenigstens einen LED kann das LED-Leuchtmittel noch andere Elemente, wie beispielsweise eine Linse zur Ausrichtung des von der LED emittierten Lichts, aufweisen. Zwingend erforderlich ist dies jedoch nicht.

Um ein ungehindertes Abstrahlen der LED-Leuchtmittel in die Umgebung des Nutzfahrzeugs zu ermöglichen, kann das wenigstens eine LED-Band von außerhalb des Nutzfahrzeugs zugänglich sein. Alternativ oder zusätzlich kann es sich vor demselben Hintergrund anbieten, wenn das wenigstens eine LED-Band außerhalb des Laderaums und/oder außerhalb einer Fahrerkabine des Nutzfahrzeugs angeordnet ist.

Gemäß einer ersten besonders bevorzugten Ausgestaltung des Nutzfahrzeugs weist das LED-Band eine Länge von wenigstens 1 m auf. So kann mit dem LED-Band in einem verhältnismäßig großen Bereich eine Außenbeleuchtung realisiert werden, was sich positiv auf den Herstellungsaufwand auswirkt. Dabei wird ein besonders geringer Herstellungsaufwand ermöglicht, wenn das LED-Band eine Länge von wenigstens 2 m, vorzugsweise wenigstens 4 m, aufweist. Unabhängig von der absoluten Länge des LED-Bands kann es sich vor prinzipiell demselben Hintergrund anbieten, wenn sich das LED-Band wenigstens über ein Viertel, vorzugsweise wenigstens über die Hälfte, der Länge und/oder Höhe der Wand erstreckt. Ein besonders geringer Herstellungsaufwand kann erreicht werden, wenn sich das wenigstens eine LED-Band wenigstens im Wesentlichen über die gesamte Länge und/oder Höhe der Wand erstreckt. Insbesondere wenn die Wand eine Seitenwand ist, ist aufgrund der Abmessungen der Seitenwand eine Erstreckung über einen entsprechenden Anteil der Länge der Wand besonders vorteilhaft.

Grundsätzlich ist es denkbar das wenigstens eine LED-Band beispielsweise an einem Chassis des Nutzfahrzeugs anzuordnen, etwa an einer dafür vorgesehenen Halterung. Besonders bevorzugt ist es allerdings, wenn das wenigstens eine LED-Band an der Wand des Aufbaus angeordnet ist. So kann auf einfache und kostengünstige Weise eine hindernisfreie Abstrahlung sowie gute Sichtbarkeit des LED-Bands erreicht werden. Dann kann das wenigstens eine LED-Band zudem wenigstens im Wesentlichen in einem Randbereich der Wand angeordnet sein. Dies kann sich nicht nur hinsichtlich einer einfachen Montage des LED-Bands anbieten, sondern auch zu einer verbesserten Erkennbarkeit des Umrisses des Nutzfahrzeugs durch andere Verkehrsteilnehmer beitragen. Besonders zweckmäßig ist es dabei, wenn der wenigstens eine Randbereich ein oberer und/oder unterer Randbereich der Wand ist. Unabhängig davon ist mit dem wenigstens einen Randbereich insbesondere ein solcher gemeint, der eine von dem zugeordneten Rand gemessene Breite von höchstens 50 cm, vorzugsweise höchstens 30 cm, insbesondere höchstens 20 cm, aufweist.

Unabhängig von einer Anordnung des LED-Bands an der Wand kann es sich anbieten, wenn das wenigstens eine LED-Band von außen gesehen wenigstens im Wesentlichen hinter einer Ebene angeordnet ist, die durch eine Außenfläche der Wand definiert wird. Auf diese Weise kann verhindert werden, dass das LED-Band gegenüber der Wand nach außen vorsteht und so in einen Gefahrenbereich ragt, in dem es leicht zu Beschädigungen kommen kann. Unabhängig davon kann vorgesehen sein, dass eine Außenseite des wenigstens einen LED-Bands wenigstens im Wesentlichen in der durch die Außenfläche der Wand definierten Ebene angeordnet ist. Dies kann zu einer guten Sichtbarkeit des LED-Bands sowie hindernisfreien Abstrahlung und somit zu einer hohen Beleuchtungsqualität beitragen.

Nicht nur um die LED-Leuchtmittel vor Einflüssen von außen zu schützen, sondern auch um die Montage des LED-Bands zu vereinfachen, kann das wenigstens eine LED-Band ein sich in Längsrichtung des LED-Bands erstreckendes Gehäuse aufweisen. Dann kann die Mehrzahl von LED-Leuchtmitteln wenigstens im Wesentlichen in dem Gehäuse aufgenommen sein. Neben der Mehrzahl von LED-Leuchtmitteln kann auch die wenigstens eine Leiterplatte des LED-Bands wenigstens im Wesentlichen in dem Gehäuse aufgenommen sein. Unabhängig davon kann das Gehäuse einfach und zweckmäßig aus einem lichtdurchlässigen Kunststoff hergestellt sein. Alternativ oder zusätzlich kann ein besonders wirksamer Schutz und zudem eine robuste Ausgestaltung des LED-Bands erreicht werden, wenn die Mehrzahl von LED-Leuchtmitteln und/oder die wenigstens eine Leiterplatte wenigstens im Wesentlichen in das Gehäuse eingebettet, insbesondere eingegossen, ist. Das Einbetten in das Gehäuse kann beispielsweise durch Extrudieren des Gehäuses um die Mehrzahl von LED-Leuchtmittel und/oder die wenigstens eine Leiterplatte herum erfolgen.

Im Hinblick auf eine einfache Montage kann es vorteilhaft sein, wenn das wenigstens eine LED-Band an wenigstens einem Profilelement des Aufbaus montiert ist. Dabei kann sich das Profilelement wenigstens im Wesentlichen in Längsrichtung, Querrichtung oder vertikaler Richtung des Nutzfahrzeugs erstrecken. Entsprechende Profilelemente eignen sich aufgrund ihrer Ausrichtung besonders für die Montage des LED-Bands. Dabei sind Profilelemente, die sich in Längsrichtung des Nutzfahrzeugs erstrecken, aufgrund ihrer typischerweise verhältnismäßig großen Länge besonders bevorzugt. Unabhängig davon kann das wenigstens eine Profilelement vorzugsweise ein an einem Rand der Wand angeordnetes Randprofil der Wand sein. Entsprechende Randprofile sind bei Nutzfahrzeugaufbauten typischerweise ohnehin vorhanden, sodass kein zusätzliches Profilelement vorgesehen werden muss. Um eine ausreichende Stabilität bereitzustellen kann das wenigstens eine Profilelement aus einem Metallwerkstoff, vorzugsweise einem Stahlwerkstoff, hergestellt sein.

Zur Montage des wenigstens einen LED-Bands kann das wenigstens eine Profilelement wenigstens eine sich in Längsrichtung des Profilelements erstreckende Montagenut aufweisen. Dann kann das wenigstens eine LED-Band in der wenigstens einen Montagenut gehalten sein. So wird eine besonders einfache Montage ermöglicht. Dies gilt umso mehr, wenn das wenigstens eine LED-Band formschlüssig in der Montagenut gehalten ist. Alternativ oder zusätzlich kann das wenigstens eine LED-Band in zuverlässiger Weise stoffschlüssig in der Montagenut gehalten sein, beispielsweise über wenigstens eine Klebeverbindung. Unabhängig von der Art der Verbindung kann die wenigstens eine Montagenut in horizontaler Richtung nach außen bezogen auf das Nutzfahrzeug geöffnet sein. Dies bietet sich hinsichtlich einer guten Sichtbarkeit des LED-Bands für andere Verkehrsteilnehmer und hindernisfreien Abstrahlung an. Um alternativ oder zusätzlich das LED-Band vor äußeren Einflüssen zu schützen, kann das LED-Band wenigstens im Wesentlichen in der wenigstens einen Montagenut aufgenommen sein.

Das wenigstens eine LED-Band kann grundsätzlich direkt in der wenigstens einen Montagenut befestigt sein. Bevorzugt ist es jedoch, wenn das wenigstens eine LED-Band über wenigstens ein, insbesondere sich in Längsrichtung der Montagenut erstreckendes, Adapterelement in der Montagenut gehalten ist. So können in der Montagenut unterschiedlich ausgestaltete LED-Bänder und andere Funktionselemente gehalten sein, ohne dass eine Anpassung der Montagenut erfolgen muss. Stattdessen kann in einfacher Weise ein entsprechend angepasstes Adapterelement verwendet werden. So kann der Herstellungsaufwand weiter reduziert werden. Dies gilt umso mehr, wenn das Adapterelement einfach und kostengünstig aus einem Kunststoff hergestellt ist. Unabhängig davon kann das wenigstens eine Adapterelement zweckmäßig als Adapterprofil ausgebildet sein. Alternativ oder zusätzlich kann das wenigstens eine LED-Band einfach und zweckmäßig in wenigstens einer sich in Längsrichtung des Adapterelements erstreckenden Adapternut des Adapterelements gehalten sein. Um durch das Adapterelement möglichst gut vor äußeren Einflüssen geschützt zu sein, kann das wenigstens eine LED-Band dann wenigstens im Wesentlichen in der Adapternut aufgenommen sein.

Das LED-Band kann einfach und kostengünstig formschlüssig in der Montagenut gehalten sein, wenn das wenigstens eine LED-Band und/oder das wenigstens eine Adapterelement wenigstens eine Hinterschneidung der wenigstens einen Montagenut formschlüssig hintergreift. Dabei kann der Formschluss zweckmäßig in Richtung der Öffnung der Montagenut wirken. Alternativ oder zusätzlich kann die Verbindung zwischen LED-Band und Montagenut besonders einfach gefügt werden, wenn das wenigstens eine LED-Band und/oder das wenigstens eine Adapterelement in die Montagenut eingerastet ist.

Prinzipiell aus denselben Gründen kann es sich hinsichtlich der Verbindung zwischen dem LED-Band und dem Adapterelement anbieten, wenn das wenigstens eine LED-Band wenigstens eine Hinterschneidung der wenigstens einen Adapternut formschlüssig hintergreift, wobei der Formschluss zweckmäßig in Richtung der Öffnung der Adapternut wirken kann. Unabhängig von der Richtung des Formschlusses wird ein besonders einfaches Fügen der Verbindung zwischen dem LED-Band und dem Adapterelement ermöglicht, wenn das wenigstens eine LED-Band in die wenigstens eine Adapternut eingerastet ist.

Die Mehrzahl von LED-Leuchtmitteln kann mehrere Konturmarkierungsleuchtmittel umfassen. So kann das LED-Band zur aktiven Markierung der äußeren Kontur des Nutzfahrzeugs beitragen. Die Konturmarkierungsleuchtmittel können zweckmäßigerweise dazu ausgebildet sein, gelbes, orangenes und/oder rotes Licht auszustrahlen. Alternativ oder zusätzlich zu Konturmarkierungsleuchtmitteln kann die Mehrzahl von LED-Leuchtmitteln mehrere Umfeldbeleuchtungsleuchtmittel zur Beleuchtung der Umgebung des Nutzfahrzeugs umfassen. So kann das LED-Band zur aktiven Ausleuchtung der Umgebung des Nutzfahrzeugs beitragen. Die Umfeldbeleuchtungsleuchtmittel können zweckmäßigerweise dazu ausgebildet sein, weißes Licht auszustrahlen.

Zu einer guten Sichtbarkeit der Konturmarkierungsleuchtmittel durch andere Verkehrsteilnehmer kann es beitragen, wenn eine Hauptabstrahlrichtung der Konturmarkierungsleuchtmittel wenigstens im Wesentlichen senkrecht zu der Wand angeordnet ist. Alternativ oder zusätzlich kann eine Hauptabstrahlrichtung der Umfeldbeleuchtungsleuchtmittel schräg nach unten bezogen auf die Wand weisen. Dies kann zu einer guten Ausleuchtung insbesondere des Bodens um das Nutzfahrzeug herum beitragen. Unter der Hauptabstrahlrichtung kann insbesondere die im Zentrum des abgestrahlten Lichtkegels angeordnete Abstrahlrichtung verstanden werden.

Um in einfacher Weise in unterschiedlichen Bereichen des Nutzfahrzeugs eine Außenbeleuchtung zu realisieren, kann die Außenbeleuchtungseinrichtung wenigstens zwei LED-Bänder umfassen, die voneinander beabstandet angeordnet sein können. Dann können die LED-Bänder in gegenüberliegenden Randbereichen der Wand angeordnet sein. Dies kann die Erkennbarkeit des Umrisses des Nutzfahrzeugs verbessern. Dabei kann es zweckmäßig sein, wenn eines der LED-Bänder in einem oberen Randbereich und das andere der LED-Bänder in einem unteren Randbereich der Wand angeordnet ist.

Grundsätzlich kann vorgesehen sein, dass die Mehrzahl von LED-Leuchtmitteln in unregelmäßigen Abständen in Längsrichtung des LED-Bands verteilt angeordnet ist. Um ein einfaches Ablängen des LED-Bands etwa von einer Vorratsrolle zu ermöglichen, kann es sich jedoch anbieten, wenn die Mehrzahl von LED-Leuchtmitteln und/oder wenigstens eine Gruppe der Mehrzahl von LED-Leuchtmitteln in wenigstens im Wesentlichen regelmäßigen Abständen in Längsrichtung des LED-Bands verteilt angeordnet ist. Bei der wenigstens einen Gruppe der Mehrzahl von LED-Leuchtmitteln kann es sich zweckmäßig um die Konturmarkierungsleuchtmittel und/oder die Umfeldbeleuchtungsleuchtmittel handeln.

Neben der Mehrzahl von LED-Leuchtmitteln kann das wenigstens eine LED-Band wenigstens ein weiteres elektrisches Funktionselement aufweisen, bei dem es sich vorzugsweise nicht um ein Leuchtmittel handelt. In das LED-Band können einfach und kostengünstig weitere elektrische Funktionselemente integriert werden. Das wenigstens eine weitere elektrische Funktionselement kann beispielsweise in einfacher Weise an der wenigstens einen Leiterplatte des LED-Bands angebracht und mit der Leiterplatte elektrisch verbunden sein.

Das wenigstens eine weitere elektrische Funktionselement kann beispielsweise wenigstens eine Kamera umfassen, die zum Erfassen eines Bilds des Nutzfahrzeugs und/oder der Umgebung des Nutzfahrzeugs eingerichtet sein kann. Das von der Kamera erfasste Bild kann dann beispielsweise zusammen mit weiteren, etwa von anderen Kameras erfassten, Bildern des Nutzfahrzeugs und/oder der Umgebung des Nutzfahrzeugs zu einem Bild des Nutzfahrzeugs aus einer Vogelperspektive weiterverarbeitet werden. Auf diese Weise kann ein sogenannter Bird's-eye view von dem Nutzfahrzeug realisiert werden, der beispielsweise beim Rangieren des Nutzfahrzeugs behilflich sein kann. Unabhängig davon kann das von der Kamera erfasste Bild und/oder das weiterverarbeitete Bild aus der Vogelperspektive beispielsweise auf einer Anzeigeeinrichtung, etwa einem Bildschirm, beispielsweise in einer Fahrerkabine des Nutzfahrzeugs angezeigt werden.

Alternativ oder zusätzlich kann das wenigstens eine weitere elektrische Funktionselement wenigstens einen Sensor umfassen. Der wenigstens eine Sensor kann beispielsweise ein Abstandssensor sein, der einen Abstand des Nutzfahrzeugs zu einem von dem Nutzfahrzeug beabstandeten Objekt erfassen kann. Alternativ oder zusätzlich kann der wenigstens eine Sensor ein Bewegungssensor sein, der eine in der Umgebung des Nutzfahrzeugs stattfindende Bewegung erfassen kann. Auf diese Weise kann einfach und kostengünstig eine Abstandserfassung und/oder eine Bewegungserfassung realisiert werden.

Grundsätzlich kann es ausreichen, wenn das wenigstens eine LED-Band lediglich eine Beleuchtungsfunktion aufweist. Dann kann das LED-Band beispielsweise allein der Konturmarkierung, insbesondere Seitenmarkierung, des Nutzfahrzeugs dienen. Es kann sich jedoch positiv auf den Herstellungsaufwand auswirken, wenn das wenigstens eine LED-Band unterschiedliche Beleuchtungsfunktionen aufweist. Dazu kann das LED-Band beispielsweise verschiedenfarbige LED-Leuchtmittel aufweisen.

Die Beleuchtungsfunktionen können eine Konturmarkierungsfunktion umfassen. So kann eine Konturmarkierung, insbesondere Seitenmarkierung, des Nutzfahrzeugs mit dem LED-Band realisiert werden. Bei aktiver Konturmarkierungsfunktion können beispielsweise die Konturmarkierungsleuchtmittel, vorzugsweise kontinuierlich, leuchten. Unabhängig von einer Konturmarkierungsfunktion können die Beleuchtungsfunktionen eine Umfeldbeleuchtungsfunktion umfassen. So kann mit dem LED-Band eine Umfeldbeleuchtung realisiert werden. Bei aktiver Umfeldbeleuchtungsfunktion können beispielsweise die Umfeldbeleuchtungsleuchtmittel, vorzugsweise kontinuierlich, leuchten. Alternativ oder zusätzlich können die Beleuchtungsfunktionen eine Blinkfunktion umfassen. So kann mit dem LED-Band ein Blinken realisiert werden. Bei aktiver Blinkfunktion kann sich beispielsweise die Helligkeit des von der Mehrzahl von LED-Leuchtmitteln oder einer Gruppe der Mehrzahl von LED-Leuchtmitteln, insbesondere den Umfeldbeleuchtungsleuchtmitteln und/oder den Konturmarkierungsleuchtmitteln, abgegebenen Lichts in unregelmäßigen oder regelmäßigen Abständen verändern. Dazu können die entsprechenden LED-Leuchtmittel beispielsweise nur in unregelmäßigen oder regelmäßigen Abständen mit elektrischer Energie versorgt werden. Unabhängig davon kann die Blinkfunktion beispielsweise als Lauflichtfunktion ausgebildet sein. Dann kann sich bei aktiver Blinkfunktion beispielsweise die Helligkeit des von unterschiedlichen LED-Leuchtmitteln abgegebenen Lichts zu unterschiedlichen Zeitpunkten verändern. Insbesondere kann sich die Helligkeit des von nacheinander angeordneten LED-Leuchtmitteln abgegebenen Lichts nacheinander verändern. Auf diese Weise kann der Eindruck einer sich bewegenden und/oder ausbreitenden Lichtquelle erzeugt werden, was einen besonders hohen Aufmerksamkeitsfaktor aufweisen kann.

Um das wenigstens eine LED-Band, insbesondere die Beleuchtungsfunktionen des wenigstens einen LED-Bands, in einfacher Weise zu steuern, kann das Nutzfahrzeug eine Steuereinrichtung aufweisen. Dann kann die Steuereinrichtung das wenigstens eine LED-Band, insbesondere die Beleuchtungsfunktionen, in Abhängigkeit von Sensordaten steuern, die von wenigstens einem Sensor des Nutzfahrzeugs erfasst werden. So wird eine an den Fahrzeugzustand und/oder die äußeren Gegebenheiten angepasste Außenbeleuchtung ermöglicht. Dabei kann der wenigstens eine Sensor einen Sensor des LED-Bands umfassen. Zwingend erforderlich ist dies jedoch nicht.

Der wenigstens eine Sensor zum Erfassen der Sensordaten, in Abhängigkeit derer die Steuereinrichtung das wenigstens eine LED-Band steuert, kann einen Fahrtrichtungssensor, einen Einbruchsensor, einen Diebstahlsensor, einen Berechtigungssensor, einen Bewegungssensor und/oder einen Spurwechselsensor umfassen. So kann die Außenbeleuchtung des Nutzfahrzeugs in einfacher Weise an entsprechende Ereignisse angepasst werden.

Der Fahrtrichtungssensor kann eingerichtet sein, die Fahrtrichtung des Nutzfahrzeugs zu erfassen. Der Fahrtrichtungssensor, etwa in Form eines Geschwindigkeitssensors, kann also beispielsweise erfassen, ob das Nutzfahrzeug vorwärts oder rückwärts fährt.

Der Einbruchsensor kann eingerichtet sein, einen Einbruch in das Nutzfahrzeug, insbesondere den Laderaum, zu erfassen. Der Einbruchsensor kann beispielsweise erfassen, wenn eine abgeschlossene Tür des Nutzfahrzeugs, insbesondere gewaltsam, geöffnet wird. Dazu kann der Einbruchsensor beispielsweise einen Türkontaktschalter umfassen.

Der Diebstahlsensor kann eingerichtet sein, einen Diebstahl des Nutzfahrzeugs zu erfassen. Der Diebstahlsensor kann beispielsweise erfassen, wenn das Nutzfahrzeug ohne Berechtigung, beispielsweise ohne dass eine Schlüsseleinheit des Nutzfahrzeugs im Nutzfahrzeug oder der Umgebung des Nutzfahrzeugs, etwa in der Zugmaschine angeordnet ist, bewegt wird. Dazu kann der Diebstahlsensor beispielsweise einen Positionserfassungssensor, etwa in Form eines GPS-Sensors, umfassen.

Der Berechtigungssensor kann eingerichtet sein, eine berechtigte Person in der Umgebung des Nutzfahrzeugs zu erfassen. Der Berechtigungssensor kann beispielsweise erfassen, wenn mit einer Schlüsseleinheit des Nutzfahrzeugs ein Funksignal in der Umgebung des Nutzfahrzeugs ausgesendet wird.

Der Bewegungssensor kann eingerichtet sein, eine Bewegung in der Umgebung des Nutzfahrzeugs zu erfassen. Der Bewegungssensor kann beispielsweise erfassen, wenn sich eine Person in der Umgebung des Nutzfahrzeugs bewegt.

Der Spurwechselsensor kann eingerichtet sein, einen Spurwechsel des Nutzfahrzeugs zu erfassen. Beispielsweise kann der Spurwechselsensor erfassen, wenn der Fahrer des Nutzfahrzeugs eine Betätigungseinrichtung, etwa in Form eines Hebels oder Schalters, betätigt, um anderen Verkehrsteilnehmern eine Fahrtrichtungsänderung des Nutzfahrzeugs, etwa ein Abbiegen, zu signalisieren.

Die Steuereinrichtung kann dazu eingerichtet sein, die Umfeldbeleuchtungsfunktion und/oder die wenigstens eine Kamera des wenigstens einen LED-Bands zu aktivieren, wenn der Fahrtrichtungssensor erfasst, dass das Nutzfahrzeug rückwärtsfährt. Durch das Aktivieren der Umfeldbeleuchtungsfunktion kann die Sicht für den Fahrer auf die Umgebung verbessert werden. Wenn die Kamera aktiviert wird, kann dem Fahrer ein von der Kamera erfasstes Bild und/oder ein basierend auf dem von der Kamera erfassten Bild erzeugtes Bild, etwa ein Bild des Nutzfahrzeugs aus einer Vogelperspektive, angezeigt werden, was die Rückwärtsfahrt erleichtern kann.

Alternativ oder zusätzlich kann die Steuereinrichtung eingerichtet sein, die Mehrzahl von LED-Leuchtmitteln, die Blinkfunktion, die Umfeldbeleuchtungsfunktion, und/oder die wenigstens eine Kamera des LED-Bands zu aktivieren, wenn der Einbruchsensor einen Einbruch in das Nutzfahrzeug, insbesondere den Laderaum, erfasst und/oder wenn der Diebstahlsensor einen Diebstahl des Nutzfahrzeugs erfasst. Das Aktivieren der LED-Leuchtmittel und/oder der Umfeldbeleuchtungsfunktion kann auf den Einbruch und/oder Diebstahl aufmerksam machen und so zu einer Vereitelung des Einbruchs und/oder Diebstahls beitragen. Vor diesem Hintergrund ist die Blinkfunktion besonders bevorzugt. Durch das Aktivieren der Kamera kann ein Bild von dem Einbrecher und/oder dem Dieb aufgenommen werden, was eine Nachverfolgung erleichtern kann.

Die Steuereinrichtung kann eingerichtet sein, die Mehrzahl von LED-Leuchtmitteln und/oder die Umfeldbeleuchtungsfunktion zu aktivieren, wenn der Bewegungssensor, beispielsweise bei stehendem, insbesondere geparktem, Fahrzeug, eine Bewegung in der Umgebung des Nutzfahrzeugs erfasst. So kann die Umgebung des Nutzfahrzeugs automatisch beleuchtet werden, etwa wenn sich der Fahrer bei geparktem Fahrzeug in der Umgebung des Nutzfahrzeugs bewegt.

Die Steuereinrichtung kann eingerichtet sein, die Mehrzahl von LED-Leuchtmitteln und/oder die Umfeldbeleuchtungsfunktion zu aktivieren, wenn der Berechtigungssensor, beispielsweise bei abgeschlossenem Fahrzeug, eine berechtigte Person in der Umgebung des Nutzfahrzeugs erfasst. Auf diese Weise kann eine sogenannte Coming Home-Funktion realisiert werden, die beispielsweise dem Fahrer bei einer Annäherung an das Fahrzeug den Standort des Fahrzeugs signalisieren kann.

Die Steuereinrichtung kann eingerichtet sein, die Blinkfunktion zu aktivieren, wenn der Spurwechselsensor einen Spurwechsel des Nutzfahrzeugs erfasst. Auf diese Weise kann anderen Verkehrsteilnehmern mittels des wenigstens einen LED-Bands eine Fahrtrichtungsänderung des Nutzfahrzeugs, etwa ein Abbiegen, signalisiert werden.

Nachfolgend wird die Erfindung anhand einer lediglich ein Ausführungsbeispiel darstellenden Zeichnung näher erläutert. In der Zeichnung zeigen jeweils schematisch
- Fig. 1: ein von einer Zugmaschine gezogenes erfindungsgemäßes Nutzfahrzeug mit einem Aufbau in einer perspektivischen Ansicht,
- Fig. 2: Details des Aufbaus aus Fig. 1 in einem oberen und einem unteren Randbereich einer Seitenwand des Aufbaus in einem Querschnitt, und
- Fig. 3: Details des Aufbaus aus Fig. 1 in einem oberen und einem unteren Randbereich der Seitenwand in einer Seitenansicht.

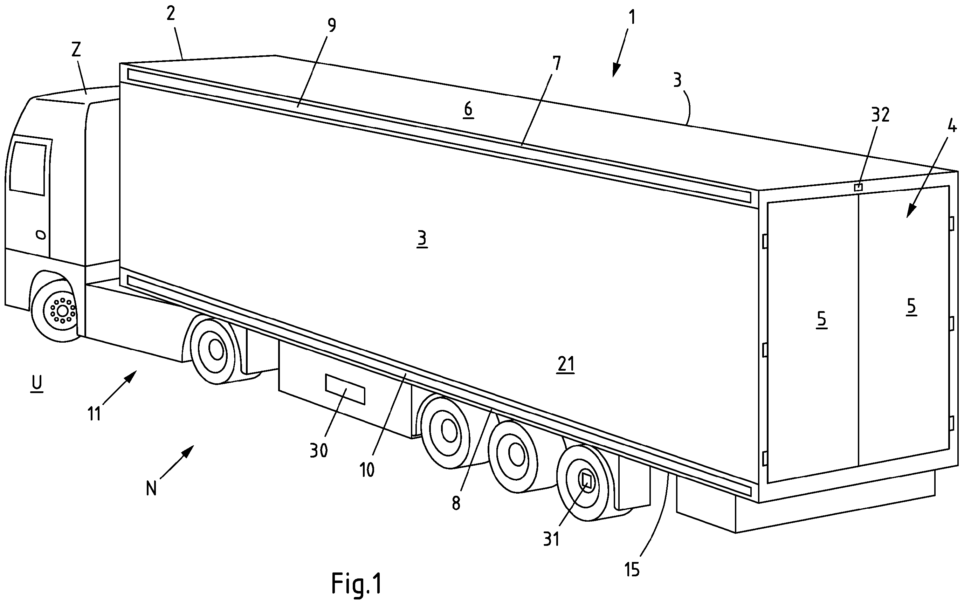

In der Fig. 1 ist ein von einer Zugmaschine Z gezogenes Nutzfahrzeug N in Form eines Sattelaufliegers in einer perspektivischen Ansicht dargestellt. Das Nutzfahrzeug N weist einen Aufbau 1 auf, der vorliegend als Kühlkofferaufbau 1 ausgebildet ist. Der Aufbau 1 umfasst eine einen Laderaum nach vorne begrenzende Stirnwand 2 und zwei Seitenwände 3, die den Laderaum auf gegenüberliegenden Seiten seitlich begrenzen. An der Rückseite des Aufbaus 1 ist eine Rückwand 4 vorgesehen, die vorliegend im Wesentlichen durch zwei Rückwandtüren 5 gebildet wird. Nach oben ist der Laderaum durch ein Dach 6 verschlossen.

Die Seitenwände 3 weisen jeweils am oberen und unteren Rand ein als Randprofil ausgebildetes Profilelement 7,8 auf, das sich in Längsrichtung des Nutzfahrzeugs N über die gesamte Länge des Nutzfahrzeugs N erstreckt. Dabei ist an den Profilelementen 7,8 jeweils ein LED-Band 9,10 einer Außenbeleuchtungseinrichtung 11 zur Beleuchtung der Umgebung U des Nutzfahrzeugs N befestigt. Die LED-Bänder 9,10 erstrecken sich jeweils entlang des zugeordneten Profilelements 7,8 über im Wesentlichen die gesamte Länge der Seitenwand 3.

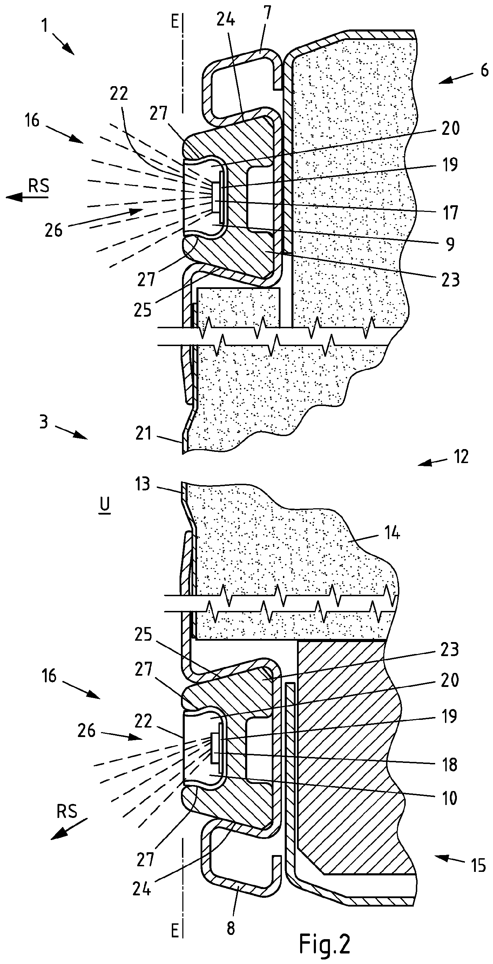

In der Fig. 2 sind Details des Aufbaus 1 in einem oberen und einem unteren Randbereich einer der Seitenwände 3 in einem Querschnitt dargestellt. Die Profileelemente 7,8 bilden den oberen und unteren Rand der Seitenwand 3, die im Übrigen im Wesentlichen durch ein Seitenwandpaneel 12 gebildet ist. Das Seitenwandpaneel 12 weist zwei strukturgebende Decklagen 13 aus Aluminium und dazwischen eine Kernlage 14 aus geschäumtem Kunststoff auf. Dabei ist vorliegend der besseren Übersichtlichkeit wegen nur die äußere, der Umgebung U zugewandte Decklage 13 dargestellt. Die innere, dem Laderaum zugewandte Decklage 13 ist nicht dargestellt. An das obere Profilelement 7 schließt sich nach innen das Dach 6 an. An das untere Profilelement 8 schließt sich nach innen ein Boden 15 des Aufbaus 1 an.

Die Profilelemente 7,8 weisen jeweils eine Montagenut 16 auf, die sich wenigstens im Wesentlichen über die gesamte Länge des entsprechenden Profilelements 7,8 erstreckt. In den Montagenuten 16 sind die LED-Bänder 9,10 montiert. Die LED-Bänder 9,10 weisen jeweils eine Mehrzahl von LED-Leuchtmitteln 17,18 auf, die über die gesamte Länge des zugehörigen LED-Bands 9,10 verteilt angeordnet sind. Dabei ist die Mehrzahl von LED-Leuchtmitteln 17,18 an einer flexiblen Leiterplatte 19 des jeweiligen LED-Bands 9,10 angebracht und mit der Leiterplatte 19 elektrisch verbunden, sodass die LED-Leuchtmittel 17,18 über die Leiterplatte 19 mit elektrischem Strom versorgt werden können.

Zum Schutz der LED-Leuchtmittel 17,18 und der Leiterplatten 19 vor Einflüssen von außen, etwa Witterungseinflüssen, weisen die LED-Bänder 9,10 jeweils ein Gehäuse 20 aus transparentem Kunststoff auf, in das die LED-Leuchtmittel 17,18 und die Leiterplatte 19 vollständig eingebettet sind. Dabei sind die LED-Bänder 9,10 so angeordnet, dass wenigstens im Wesentlichen der gesamte Querschnitt der LED-Bänder 9,10 von außen gesehen hinter einer Ebene E angeordnet ist, die durch eine Außenfläche 21der Seitenwand 3 definiert wird. Die jeweils durch das Gehäuse 20 gebildete Außenseite 22 der LED-Bänder 9,10 liegt wenigstens im Wesentlichen in der Ebene E.

Das in der Fig. 2 dargestellte LED-Leuchtmittel 17 des oberen LED-Bands 9 ist als orange leuchtendes Konturmarkierungsleuchtmittel 17 ausgebildet, das insbesondere der aktiven Markierung der äußeren Kontur des Nutzfahrzeugs N dient. Dabei ist die Hauptabstrahlrichtung RS des Konturmarkierungsleuchtmittels 17 im Wesentlichen senkrecht zu der Seitenwand 3 angeordnet. Das in der Fig. 2 dargestellte LED-Leuchtmittel 18 des unteren LED-Bands 10 ist dagegen als weiß leuchtendes Umfeldbeleuchtungsleuchtmittel 18 ausgebildet, das insbesondere der Ausleuchtung der Umgebung U des Nutzfahrzeugs N dient. Dementsprechend weist die Hauptabstrahlrichtung RS des Umfeldbeleuchtungsleuchtmittel 18 im dargestellten und insoweit bevorzugten Ausführungsbeispiel schräg nach unten bezogen auf die Seitenwand 3.

Die LED-Bänder 9,10 sind jeweils über ein sich vorliegend über wenigstens im Wesentlichen die gesamte Länge des LED-Bands 9,10 erstreckendes Adapterelement 23 aus Kunststoff in der Montagenut 16 des zugehörigen Profilelements 7,8 gehalten. Die Adapterelemente 23 sind als Adapterprofile ausgebildet, die im dargestellten und insoweit bevorzugten Ausführungsbeispiel einen etwa H-förmigen Querschnitt mit zwei seitlichen Schenkeln und einem die Schenkel verbindenden Steg aufweisen. Die Schenkel hintergreifen dabei jeweils eine Hinterschneidung 24,25 der Montagenut 16 des entsprechenden Profilelements 7,8 und halten das Adapterelement 23 auf diese Weise formschlüssig in der Montagenut 16. Zudem können die Adapterelemente 23 an den Kontaktflächen in der jeweiligen Montagenut 16 verklebt und so auch stoffschlüssig in der Montagenut 16 gehalten sein.

Zum Montieren eines Adapterelements 23 in der zugehörigen Montagenut 16 werden die Schenkel des leicht flexiblen Adapterelements 23 zusammengedrückt und in die Montagenut 16 eingeführt. In der Montagenut 16 stellen sich die Schenkel aufgrund der Rückstellkräfte wieder in ihre ursprüngliche Form zurück und verrasten so das Adapterelement 23 in der Montagenut 16.

Die LED-Bänder 9,10 sind jeweils in einer Adapternut 26 des entsprechenden Adapterelements 23 gehalten, wobei sich die Adapternut 26 wenigstens im Wesentlichen über die gesamte Länge des Adapterelements 23 erstreckt. Die LED-Bänder 9,10 sind vorliegend wenigstens im Wesentlichen in den Adapternuten 26 aufgenommen. Dabei hintergreifen die Gehäuse 20 der LED-Bänder 9,10 jeweils zwei auf gegenüberliegenden Längsseiten der Adapternut 26 angeordnete Hinterschneidungen 27 der Adapternut 26. Auf diese Weise sind die LED-Bänder 9,10 vorliegend formschlüssig in den Adapternuten 26 gehalten. Zudem können die LED-Bänder 9,10 in den Adapternuten 26 verklebt sein.

Zur Montage eines LED-Bands 9,10 in einer Adapternut 26 wird das LED-Band 9,10 in die Öffnung der Adapternut 26 gedrückt, wodurch die leicht flexiblen Schenkel des Adapterelements 23 nach außen gedrückt werden. Sobald das LED-Band 9,10 in die Adapternut 26 eingeführt ist, kehren die Schenkel des Adapterelements 23 aufgrund der Rückstellkräfte zurück in ihre ursprüngliche Form und verrasten so das LED-Band 9,10 in der Adapternut 26. Insbesondere bei langen LED-Bänder 9,10 kann es sich anbieten, wenn die Leiterplatte 19 flexibel ist. Dann kann nämlich das LED-Band 9,10 entlang seiner Längsachse Abschnitt für Abschnitt in die Adapternut 26 eingedrückt werden.

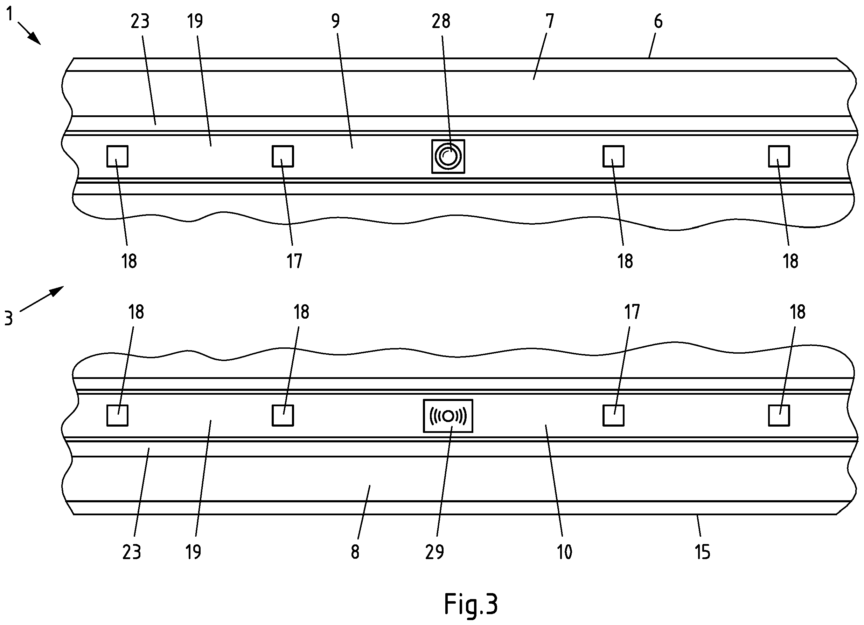

In der Fig. 3 sind Details des Aufbaus 1 im Bereich eines oberen und eines unteren Randbereichs einer der Seitenwände 3 in einer Seitenansicht dargestellt. Die sich entlang der Profilelemente 7,8 erstreckenden LED-Bänder 9,10 weisen jeweils eine Vielzahl von Umfeldbeleuchtungsleuchtmitteln 18 auf, die in Längsrichtung des LED-Bands 9,10 in wenigstens im Wesentlichen regelmäßigen Abständen verteilt angeordnet sind. Zudem weisen die LED-Bänder 9,10 jeweils eine Mehrzahl von Konturmarkierungsleuchtmitteln 17 auf, die vorliegend ebenfalls in wenigstens im Wesentlichen regelmäßigen Abständen in Längsrichtung des LED-Bands 9,10 verteilt angeordnet, jedoch weiter voneinander beabstandet sind als die Umfeldbeleuchtungsleuchtmittel 18.

Neben den LED-Leuchtmitteln 17,18 weisen die LED-Bänder 9,10 im dargestellten und insoweit bevorzugten Ausführungsbeispiel jeweils mehrere Kameras 28 zum Erfassen von Bildern der Umgebung U und/oder des Nutzfahrzeugs N sowie mehrere Sensoren 29 in Form von Abstandssensoren und Bewegungssensoren auf. Die Kameras 28 und die Sensoren 29 sind jeweils an der Leiterplatte 19 des entsprechenden LED-Bands 9,10 angebracht und werden über die Leiterplatte 19 mit elektrischem Strom versorgt.

Wie in der Fig. 1 dargestellt, weist das Nutzfahrzeug N eine Steuereinrichtung 30 auf. Die Steuereinrichtung 30 ist über vorliegend nicht dargestellte Netzwerkverbindungen mit den LED-Bändern 9,10 und unterschiedlichen Sensoren 29,31,32 des Nutzfahrzeugs N verbunden, um die LED-Bänder 9,10 in Abhängigkeit von den von den Sensoren 29,31,32 erfassten Sensordaten zu steuern. So ist die Steuereinrichtung 30 vorliegend mit einem als Geschwindigkeitssensor ausgebildeten Fahrtrichtungssensor 31, mit einem Einbruchsensor 32 und mit den Bewegungssensoren 29 der LED-Bänder 9,10 verbunden. Zudem ist die Steuereinrichtung 30 mit den Kameras 28 der LED-Bänder 9,10 verbunden.

Wenn der Einbruchsensor 32 einen Einbruch in den Laderaum des Nutzfahrzeugs N erfasst, aktiviert die Steuereinrichtung 30 eine Blinkfunktion der LED-Bänder 9,10. Bei aktiver Blinkfunktion blinken vorliegend die Konturmarkierungsleuchtmittel 17 und die Umfeldbeleuchtungsleuchtmitteln 18 in regelmäßigen Abständen auf und machen so auf den Einbruch aufmerksam.

Wenn der Fahrtrichtungssensor 31 erfasst, dass das Nutzfahrzeug N rückwärtsfährt, aktiviert die Steuereinrichtung 30 vorliegend eine Umfeldbeleuchtungsfunktion der LED-Bänder 9,10 sowie die Kameras 28 der LED-Bänder 9,10. Bei aktiver Umfeldbeleuchtungsfunktion leuchten vorliegend die Umfeldbeleuchtungsleuchtmittel 18 der LED-Bänder 9,10 kontinuierlich und leuchten so die Umgebung U des Nutzfahrzeugs N für eine bessere Sicht des Fahrers aus. Die von den Kameras 28 der LED-Bänder 9,10 erfassten Bilder werden zu einem Bild des Nutzfahrzeugs N aus einer Vogelperspektive verarbeitet, welches dem Fahrer in der Zugmaschine Z angezeigt wird.

Wenn die Bewegungssensoren 29 der LED-Bänder 9,10 bei geparktem Nutzfahrzeug N und Dunkelheit eine Bewegung in der Umgebung U des Nutzfahrzeugs N erfassen, aktiviert die Steuereinrichtung 30 die Umfeldbeleuchtungsfunktion, um so beispielsweise dem Fahrer bei einem Gang um das Nutzfahrzeug N herum eine bessere Sicht zu ermöglichen.

### Bezugszeichenliste

- 1: Aufbau
- 2: Stirnwand
- 3: Seitenwand
- 4: Rückwand
- 5: Rückwandtür
- 6: Dach
- 7,8: Profilelement
- 9,10: LED-Band
- 11: Außenbeleuchtungseinrichtung
- 12: Seitenwandpaneel
- 13: Decklage
- 14: Kernlage
- 15: Boden
- 16: Montagenut
- 17: LED-Leuchtmittel, Konturmarkierungsleuchtmittel
- 18: LED-Leuchtmittel, Umfeldbeleuchtungsleuchtmittel
- 19: Leiterplatte
- 20: Gehäuse
- 21: Außenfläche
- 22: Außenseite
- 23: Adapterelement
- 24,25: Hinterschneidung einer Montagenut
- 26: Adapternut
- 27: Hinterschneidung einer Adapternut
- 28: Kamera
- 29: Sensor
- 30: Steuereinrichtung
- 31: Fahrtrichtungssensor
- 32: Einbruchsensor
- E: Ebene
- N: Nutzfahrzeug
- RS: Hauptabstrahlrichtung
- U: Umgebung
- Z: Zugmaschine

## Patentansprüche

1. Nutzfahrzeug (N), insbesondere Lastkraftwagen, Anhänger oder Sattelauflieger, mit einem einen Laderaum zur Aufnahme von Ladung bereitstellenden Aufbau (1), insbesondere Kofferaufbau (1), wobei der Aufbau (1) wenigstens eine den Laderaum abschnittsweise begrenzende Wand (2,3,4), insbesondere seitlich begrenzende Seitenwand (3), aufweist und wobei wenigstens eine elektrische Außenbeleuchtungseinrichtung (11) zum Ausstrahlen von Licht in die Umgebung (U) des Nutzfahrzeugs (N), insbesondere zur Markierung der äußeren Kontur des Nutzfahrzeugs (N) und/oder zur Beleuchtung der Umgebung (U) des Nutzfahrzeugs (N), vorgesehen ist,
**dadurch gekennzeichnet, dass**
die wenigstens eine Außenbeleuchtungseinrichtung (11) wenigstens ein sich wenigstens abschnittsweise entlang der Wand (2,3,4) erstreckendes LED-Band (9,10) aufweist und dass das wenigstens eine LED-Band (9,10) eine Mehrzahl von in Längsrichtung des LED-Bands (9,10) verteilt angeordneten LED-Leuchtmitteln (17,18) aufweist.

2. Nutzfahrzeug nach Anspruch 1,
**dadurch gekennzeichnet, dass**
das wenigstens eine LED-Band (9,10) eine Länge von wenigstens 1 m, vorzugsweise wenigstens 2 m, insbesondere wenigstens 4 m, aufweist und/oder dass sich das wenigstens eine LED-Band (9,10) wenigstens über ein Viertel, vorzugsweise wenigstens über die Hälfte, insbesondere wenigstens im Wesentlichen über die gesamte Länge und/oder Höhe der Wand (2,3,4) erstreckt.

3. Nutzfahrzeug nach Anspruch 1 oder 2,
**dadurch gekennzeichnet, dass**
das wenigstens eine LED-Band (9,10) an der Wand (2,3,4) angeordnet ist und dass, vorzugsweise, das wenigstens eine LED-Band (9,10) wenigstens im Wesentlichen in einem, insbesondere oberen und/oder unteren, Randbereich der Wand (2,3,4) angeordnet ist.

4. Nutzfahrzeug nach einem der Ansprüche 1 bis 3,
**dadurch gekennzeichnet, dass**
das wenigstens eine LED-Band (9,10) von außen gesehen wenigstens im Wesentlichen hinter einer durch eine Außenfläche (21) der Wand (2,3,4) definierten Ebene (E) angeordnet ist und dass, vorzugsweise, eine Außenseite (22) des wenigstens einen LED-Bands (9,10) wenigstens im Wesentlichen in der durch die Außenfläche (21) der Wand (2,3,4) definierten Ebene (E) angeordnet ist.

5. Nutzfahrzeug nach einem der Ansprüche 1 bis 4,
**dadurch gekennzeichnet, dass**
das wenigstens eine LED-Band (9,10) ein sich in Längsrichtung des LED-Bands (9,10) erstreckendes Gehäuse (20), insbesondere aus einem lichtdurchlässigen Kunststoff, aufweist und dass die Mehrzahl von LED-Leuchtmitteln (17,18) und, vorzugsweise, wenigstens eine Leiterplatte (19) des LED-Bands (9,10) wenigstens im Wesentlichen in dem Gehäuse (20) aufgenommen, insbesondere wenigstens im Wesentlichen in das Gehäuse (20) eingebettet, sind.

6. Nutzfahrzeug nach einem der Ansprüche 1 bis 5,
**dadurch gekennzeichnet, dass**
das wenigstens eine LED-Band (9,10) an wenigstens einem sich wenigstens im Wesentlichen in Längsrichtung, Querrichtung oder vertikaler Richtung des Nutzfahrzeugs (N) erstreckenden, insbesondere aus einem Stahlwerkstoff hergestellten, Profilelement (7,8) des Aufbaus (1) montiert ist, dass, vorzugsweise, das wenigstens eine LED-Band (9,10), insbesondere formschlüssig und/oder stoffschlüssig, in wenigstens einer sich in Längsrichtung des Profilelements (7,8) erstreckenden, insbesondere in horizontaler Richtung nach außen bezogen auf das Nutzfahrzeug (N) offenen, Montagenut (16) des wenigstens einen Profilelements (7,8) gehalten ist und dass, weiter vorzugsweise, das wenigstens eine LED-Band (9,10) wenigstens im Wesentlichen in der wenigstens einen Montagenut (16) aufgenommen ist.

7. Nutzfahrzeug nach Anspruch 6,
**dadurch gekennzeichnet, dass**
das wenigstens eine LED-Band (9,10) über wenigstens ein sich in Längsrichtung der Montagenut (16) erstreckendes, insbesondere aus einem Kunststoff hergestelltes, Adapterelement (23), insbesondere Adapterprofil (23), in der Montagenut (16) gehalten ist und dass, vorzugsweise, das wenigstens eine LED-Band (9,10) in wenigstens einer sich in Längsrichtung des Adapterelements (23) erstreckenden Adapternut (26) des Adapterelements (23) gehalten, insbesondere wenigstens im Wesentlichen aufgenommen, ist.

8. Nutzfahrzeug nach Anspruch 6 oder 7,
**dadurch gekennzeichnet, dass**
das wenigstens eine LED-Band (9,10) und/oder das wenigstens eine Adapterelement (23) wenigstens eine Hinterschneidung (24,25) der wenigstens einen Montagenut (16) formschlüssig hintergreift und/oder in die wenigstens eine Montagenut (16) eingerastet ist und/oder dass das wenigstens eine LED-Band (9,10) wenigstens eine Hinterschneidung (27) der wenigstens einen Adapternut (26) formschlüssig hintergreift und/oder in die wenigstens eine Adapternut (26) eingerastet ist.

9. Nutzfahrzeug nach einem der Ansprüche 1 bis 8,
**dadurch gekennzeichnet, dass**
die Mehrzahl von LED-Leuchtmitteln (17,18), insbesondere gelbe, orangene und/oder rote, Konturmarkierungsleuchtmittel (17) zur Markierung der äußeren Kontur des Nutzfahrzeugs (N) und/oder, insbesondere weiße, Umfeldbeleuchtungsleuchtmittel (18) zur Beleuchtung der Umgebung (U) des Nutzfahrzeugs (N) umfasst und dass, vorzugsweise, eine Hauptabstrahlrichtung der Konturmarkierungsleuchtmittel (17) wenigstens im Wesentlichen senkrecht zu der Wand (2,3,4) angeordnet ist und/oder eine Hauptabstrahlrichtung der Umfeldbeleuchtungsleuchtmittel (18) schräg nach unten bezogen auf die Wand (2,3,4) weist.

10. Nutzfahrzeug nach einem der Ansprüche 1 bis 9,
**dadurch gekennzeichnet, dass**
die Außenbeleuchtungseinrichtung (11) wenigstens zwei voneinander beabstandet angeordnete LED-Bänder (9,10) aufweist und dass, vorzugsweise, die LED-Bänder (9,10) in gegenüberliegenden Randbereichen, insbesondere einem oberen und einem unteren Randbereich, der Wand (2,3,4) angeordnet sind.

11. Nutzfahrzeug nach einem der Ansprüche 1 bis 10,
**dadurch gekennzeichnet, dass**
die Mehrzahl von LED-Leuchtmitteln (17,18) und/oder wenigstens eine Gruppe der Mehrzahl von LED-Leuchtmitteln (17,18), insbesondere die Konturmarkierungsleuchtmittel (17) und/oder die Umfeldbeleuchtungsleuchtmittel (18), in wenigstens im Wesentlichen regelmäßigen Abständen in Längsrichtung des LED-Bands (9,10) verteilt angeordnet ist.

12. Nutzfahrzeug nach einem der Ansprüche 1 bis 11,
**dadurch gekennzeichnet, dass**
das wenigstens eine LED-Band (9,10) wenigstens ein weiteres elektrisches Funktionselement (28,29) aufweist und dass, vorzugsweise, das wenigstens eine weitere elektrische Funktionselement (28,29) wenigstens eine Kamera (28) zum Erfassen eines Bilds des Nutzfahrzeugs (N) und/oder der Umgebung (U) des Nutzfahrzeugs (N) und/oder wenigstens einen Sensor (29), insbesondere einen Abstandssensor zum Erfassen eines Abstands des Nutzfahrzeugs (N) zu einem von dem Nutzfahrzeug (N) beabstandeten Objekt und/oder einen Bewegungssensor zum Erfassen einer Bewegung in der Umgebung (U) des Nutzfahrzeugs (N), umfasst.

13. Nutzfahrzeug nach einem der Ansprüche 1 bis 12,
**dadurch gekennzeichnet, dass**
das wenigstens eine LED-Band (9,10) unterschiedliche Beleuchtungsfunktionen aufweist und dass, vorzugsweise, die Beleuchtungsfunktionen eine Konturmarkierungsfunktion, eine Umfeldbeleuchtungsfunktion und/oder eine Blinkfunktion, insbesondere Lauflichtfunktion, umfassen.

14. Nutzfahrzeug nach einem der Ansprüche 1 bis 13,
**dadurch gekennzeichnet, dass**
eine Steuereinrichtung (30) zum Steuern des wenigstens einen LED-Bands (9,10), insbesondere der Beleuchtungsfunktionen des wenigstens einen LED-Bands (9,10), in Abhängigkeit von von wenigstens einem Sensor (29,31,32) erfassten Sensordaten vorgesehen ist und dass, vorzugsweise, der wenigstens eine Sensor (29,31,32) einen Fahrtrichtungssensor (31) zum Erfassen der Fahrtrichtung des Nutzfahrzeugs (N), einen Einbruchsensor (32) zum Erfassen eines Einbruchs in das Nutzfahrzeug (N), einen Diebstahlsensor zum Erfassen eines Diebstahls des Nutzfahrzeugs (N), einen Berechtigungssensor zum Erfassen einer berechtigten Person in der Umgebung (U) des Nutzfahrzeugs (N), einen Bewegungssensor (29) zum Erfassen einer Bewegung in der Umgebung (U) des Nutzfahrzeugs (N) und/oder einen Spurwechselsensor zum Erfassen eines Spurwechsels des Nutzfahrzeugs (N) umfasst.

15. Nutzfahrzeug nach Anspruch 14,
**dadurch gekennzeichnet, dass**
die Steuereinrichtung (30) eingerichtet ist,
- bei Erfassen einer Rückwärtsfahrt des Nutzfahrzeugs (N) durch den Fahrtrichtungssensor (31) die Umfeldbeleuchtungsfunktion und/oder die wenigstens eine Kamera (28) zu aktivieren,
- bei Erfassen eines Einbruchs in das Nutzfahrzeug (N) durch den Einbruchsensor (32) und/oder eines Diebstahls des Nutzfahrzeugs (N) durch den Diebstahlsensor die Mehrzahl von LED-Leuchtmitteln (17,18), die Blinkfunktion, die Umfeldbeleuchtungsfunktion und/oder die wenigstens eine Kamera (28) zu aktivieren,
- bei Erfassen einer Bewegung in der Umgebung (U) des Nutzfahrzeugs (N) durch den Bewegungssensor (29) die Mehrzahl von LED-Leuchtmitteln (17,18) und/oder die Umfeldbeleuchtungsfunktion zu aktivieren,
- bei Erfassen einer berechtigten Person in der Umgebung (U) des Nutzfahrzeugs (N) durch den Berechtigungssensor die Mehrzahl von LED-Leuchtmitteln (17,18) und/oder die Umfeldbeleuchtungsfunktion zu aktivieren und/oder
- bei Erfassen eines Spurwechsels des Nutzfahrzeugs (N) durch den Spurwechselsensor die Blinkfunktion zu aktivieren.

## Geänderte Patentansprüche

### Geänderte Patentansprüche gemäss Regel 137(2) EPÜ.

1. Nutzfahrzeug (N), insbesondere Lastkraftwagen, Anhänger oder Sattelauflieger, mit einem einen Laderaum zur Aufnahme von Ladung bereitstellenden Aufbau (1), insbesondere Kofferaufbau (1), wobei der Aufbau (1) wenigstens eine den Laderaum abschnittsweise begrenzende Wand (2,3,4), insbesondere seitlich begrenzende Seitenwand (3), aufweist, wobei wenigstens eine elektrische Außenbeleuchtungseinrichtung (11) zum Ausstrahlen von Licht in die Umgebung (U) des Nutzfahrzeugs (N), insbesondere zur Markierung der äußeren Kontur des Nutzfahrzeugs (N) und/oder zur Beleuchtung der Umgebung (U) des Nutzfahrzeugs (N), vorgesehen ist, wobei die wenigstens eine Außenbeleuchtungseinrichtung (11) wenigstens ein sich wenigstens abschnittsweise entlang der Wand (2,3,4) erstreckendes LED-Band (9,10) aufweist und wobei das wenigstens eine LED-Band (9,10) eine Mehrzahl von in Längsrichtung des LED-Bands (9,10) verteilt angeordneten LED-Leuchtmitteln (17,18) aufweist,
**dadurch gekennzeichnet, dass**
das wenigstens eine LED-Band (9,10) an wenigstens einem sich wenigstens im Wesentlichen in Längsrichtung, Querrichtung oder vertikaler Richtung des Nutzfahrzeugs (N) erstreckenden Profilelement (7,8) des Aufbaus (1) montiert ist.

2. Nutzfahrzeug nach Anspruch 1,
**dadurch gekennzeichnet, dass**
das wenigstens eine LED-Band (9,10) eine Länge von wenigstens 1 m, vorzugsweise wenigstens 2 m, insbesondere wenigstens 4 m, aufweist und/oder dass sich das wenigstens eine LED-Band (9,10) wenigstens über ein Viertel, vorzugsweise wenigstens über die Hälfte, insbesondere wenigstens im Wesentlichen über die gesamte Länge und/oder Höhe der Wand (2,3,4) erstreckt.

3. Nutzfahrzeug nach Anspruch 1 oder 2,
**dadurch gekennzeichnet, dass**
das wenigstens eine LED-Band (9,10) an der Wand (2,3,4) angeordnet ist und dass, vorzugsweise, das wenigstens eine LED-Band (9,10) wenigstens im Wesentlichen in einem, insbesondere oberen und/oder unteren, Randbereich der Wand (2,3,4) angeordnet ist.

4. Nutzfahrzeug nach einem der Ansprüche 1 bis 3,
**dadurch gekennzeichnet, dass**
das wenigstens eine LED-Band (9,10) von außen gesehen wenigstens im Wesentlichen hinter einer durch eine Außenfläche (21) der Wand (2,3,4) definierten Ebene (E) angeordnet ist und dass, vorzugsweise, eine Außenseite (22) des wenigstens einen LED-Bands (9,10) wenigstens im Wesentlichen in der durch die Außenfläche (21) der Wand (2,3,4) definierten Ebene (E) angeordnet ist.

5. Nutzfahrzeug nach einem der Ansprüche 1 bis 4,
**dadurch gekennzeichnet, dass**
das wenigstens eine LED-Band (9,10) ein sich in Längsrichtung des LED-Bands (9,10) erstreckendes Gehäuse (20), insbesondere aus einem lichtdurchlässigen Kunststoff, aufweist und dass die Mehrzahl von LED-Leuchtmitteln (17,18) und, vorzugsweise, wenigstens eine Leiterplatte (19) des LED-Bands (9,10) wenigstens im Wesentlichen in dem Gehäuse (20) aufgenommen, insbesondere wenigstens im Wesentlichen in das Gehäuse (20) eingebettet, sind.

6. Nutzfahrzeug nach einem der Ansprüche 1 bis 5,
**dadurch gekennzeichnet, dass**
das wenigstens eine Profilelement (7,8) aus einem Stahlwerkstoff hergestellt ist und/oder dass das wenigstens eine LED-Band (9,10), insbesondere formschlüssig und/oder stoffschlüssig, in wenigstens einer sich in Längsrichtung des Profilelements (7,8) erstreckenden, insbesondere in horizontaler Richtung nach außen bezogen auf das Nutzfahrzeug (N) offenen, Montagenut (16) des wenigstens einen Profilelements (7,8) gehalten ist und, vorzugsweise, das wenigstens eine LED-Band (9,10) wenigstens im Wesentlichen in der wenigstens einen Montagenut (16) aufgenommen ist.

7. Nutzfahrzeug nach Anspruch 6,
**dadurch gekennzeichnet, dass**
das wenigstens eine LED-Band (9,10) über wenigstens ein sich in Längsrichtung der Montagenut (16) erstreckendes, insbesondere aus einem Kunststoff hergestelltes, Adapterelement (23), insbesondere Adapterprofil (23), in der Montagenut (16) gehalten ist und dass, vorzugsweise, das wenigstens eine LED-Band (9,10) in wenigstens einer sich in Längsrichtung des Adapterelements (23) erstreckenden Adapternut (26) des Adapterelements (23) gehalten, insbesondere wenigstens im Wesentlichen aufgenommen, ist.

8. Nutzfahrzeug nach Anspruch 6 oder 7,
**dadurch gekennzeichnet, dass**
das wenigstens eine LED-Band (9,10) und/oder das wenigstens eine Adapterelement (23) wenigstens eine Hinterschneidung (24,25) der wenigstens einen Montagenut (16) formschlüssig hintergreift und/oder in die wenigstens eine Montagenut (16) eingerastet ist und/oder dass das wenigstens eine LED-Band (9,10) wenigstens eine Hinterschneidung (27) der wenigstens einen Adapternut (26) formschlüssig hintergreift und/oder in die wenigstens eine Adapternut (26) eingerastet ist.

9. Nutzfahrzeug nach einem der Ansprüche 1 bis 8,
**dadurch gekennzeichnet, dass**
die Mehrzahl von LED-Leuchtmitteln (17,18), insbesondere gelbe, orangene und/oder rote, Konturmarkierungsleuchtmittel (17) zur Markierung der äußeren Kontur des Nutzfahrzeugs (N) und/oder, insbesondere weiße, Umfeldbeleuchtungsleuchtmittel (18) zur Beleuchtung der Umgebung (U) des Nutzfahrzeugs (N) umfasst und dass, vorzugsweise, eine Hauptabstrahlrichtung der Konturmarkierungsleuchtmittel (17) wenigstens im Wesentlichen senkrecht zu der Wand (2,3,4) angeordnet ist und/oder eine Hauptabstrahlrichtung der Umfeldbeleuchtungsleuchtmittel (18) schräg nach unten bezogen auf die Wand (2,3,4) weist.

10. Nutzfahrzeug nach einem der Ansprüche 1 bis 9,
**dadurch gekennzeichnet, dass**
die Außenbeleuchtungseinrichtung (11) wenigstens zwei voneinander beabstandet angeordnete LED-Bänder (9,10) aufweist und dass, vorzugsweise, die LED-Bänder (9,10) in gegenüberliegenden Randbereichen, insbesondere einem oberen und einem unteren Randbereich, der Wand (2,3,4) angeordnet sind.

11. Nutzfahrzeug nach einem der Ansprüche 1 bis 10,
**dadurch gekennzeichnet, dass**
die Mehrzahl von LED-Leuchtmitteln (17,18) und/oder wenigstens eine Gruppe der Mehrzahl von LED-Leuchtmitteln (17,18), insbesondere die Konturmarkierungsleuchtmittel (17) und/oder die Umfeldbeleuchtungsleuchtmittel (18), in wenigstens im Wesentlichen regelmäßigen Abständen in Längsrichtung des LED-Bands (9,10) verteilt angeordnet ist.

12. Nutzfahrzeug nach einem der Ansprüche 1 bis 11,
**dadurch gekennzeichnet, dass**
das wenigstens eine LED-Band (9,10) wenigstens ein weiteres elektrisches Funktionselement (28,29) aufweist und dass, vorzugsweise, das wenigstens eine weitere elektrische Funktionselement (28,29) wenigstens eine Kamera (28) zum Erfassen eines Bilds des Nutzfahrzeugs (N) und/oder der Umgebung (U) des Nutzfahrzeugs (N) und/oder wenigstens einen Sensor (29), insbesondere einen Abstandssensor zum Erfassen eines Abstands des Nutzfahrzeugs (N) zu einem von dem Nutzfahrzeug (N) beabstandeten Objekt und/oder einen Bewegungssensor zum Erfassen einer Bewegung in der Umgebung (U) des Nutzfahrzeugs (N), umfasst.

13. Nutzfahrzeug nach einem der Ansprüche 1 bis 12,
**dadurch gekennzeichnet, dass**
das wenigstens eine LED-Band (9,10) unterschiedliche Beleuchtungsfunktionen aufweist und dass, vorzugsweise, die Beleuchtungsfunktionen eine Konturmarkierungsfunktion, eine Umfeldbeleuchtungsfunktion und/oder eine Blinkfunktion, insbesondere Lauflichtfunktion, umfassen.

14. Nutzfahrzeug nach einem der Ansprüche 1 bis 13,
**dadurch gekennzeichnet, dass**
eine Steuereinrichtung (30) zum Steuern des wenigstens einen LED-Bands (9,10), insbesondere der Beleuchtungsfunktionen des wenigstens einen LED-Bands (9,10), in Abhängigkeit von von wenigstens einem Sensor (29,31,32) erfassten Sensordaten vorgesehen ist und dass, vorzugsweise, der wenigstens eine Sensor (29,31,32) einen Fahrtrichtungssensor (31) zum Erfassen der Fahrtrichtung des Nutzfahrzeugs (N), einen Einbruchsensor (32) zum Erfassen eines Einbruchs in das Nutzfahrzeug (N), einen Diebstahlsensor zum Erfassen eines Diebstahls des Nutzfahrzeugs (N), einen Berechtigungssensor zum Erfassen einer berechtigten Person in der Umgebung (U) des Nutzfahrzeugs (N), einen Bewegungssensor (29) zum Erfassen einer Bewegung in der Umgebung (U) des Nutzfahrzeugs (N) und/oder einen Spurwechselsensor zum Erfassen eines Spurwechsels des Nutzfahrzeugs (N) umfasst.

15. Nutzfahrzeug nach Anspruch 14,
**dadurch gekennzeichnet, dass**
die Steuereinrichtung (30) eingerichtet ist,
- bei Erfassen einer Rückwärtsfahrt des Nutzfahrzeugs (N) durch den Fahrtrichtungssensor (31) die Umfeldbeleuchtungsfunktion und/oder die wenigstens eine Kamera (28) zu aktivieren,
- bei Erfassen eines Einbruchs in das Nutzfahrzeug (N) durch den Einbruchsensor (32) und/oder eines Diebstahls des Nutzfahrzeugs (N) durch den Diebstahlsensor die Mehrzahl von LED-Leuchtmitteln (17,18), die Blinkfunktion, die Umfeldbeleuchtungsfunktion und/oder die wenigstens eine Kamera (28) zu aktivieren,
- bei Erfassen einer Bewegung in der Umgebung (U) des Nutzfahrzeugs (N) durch den Bewegungssensor (29) die Mehrzahl von LED-Leuchtmitteln (17,18) und/oder die Umfeldbeleuchtungsfunktion zu aktivieren,
- bei Erfassen einer berechtigten Person in der Umgebung (U) des Nutzfahrzeugs (N) durch den Berechtigungssensor die Mehrzahl von LED-Leuchtmitteln (17,18) und/oder die Umfeldbeleuchtungsfunktion zu aktivieren und/oder
- bei Erfassen eines Spurwechsels des Nutzfahrzeugs (N) durch den Spurwechselsensor die Blinkfunktion zu aktivieren.
